# EUROPEAN PATENT SPECIFICATION

(11) **EP 4 165 969 B1**
(45) Date of publication and mention of the grant of the patent: **03.07.2024**
(21) Application number: 22201050.6
(22) Date of filing: 12.10.2022
(51) Int. Cl.: A01C 11/02

(54) **A QUICK-SET TRANSPLANTING MACHINE FOR TRANSPLANTING BALLED ROOT SEEDLINGS**
SCHNELLAUSPFLANZMASCHINE ZUM AUSPFLANZEN VON WURZELBALLENSETZLINGEN
MACHINE DE TRANSPLANTATION À RÉGLAGE RAPIDE POUR TRANSPLANTER DES PLANTS DE RACINES EN BOULE

(30) Priority: 15.10.2021 IT 202100026474
(43) Date of publication of application: 19.04.2023
(73) Proprietor: Ferrari Costruzioni Meccaniche S.r.l., 46040 Guidizzolo (MN) (IT)
(72) Inventor: FERRARI, Francesco, 46040 Guidizzolo (MN) (IT)
(74) Representative: Mari, Marco Giovanni

(56) References cited:
- EP-A1- 0 485 015
- CN-A- 102 972 132
- JP-A- 2009 284 858
- JP-A- 2012 165 652
- JP-A- 2013 116 129

## Description

### Technical field

The present invention concerns a transplanter machine of seedlings rooted in sods with quick set-up.

### Background art

As is known, transplanting machines are used to quickly transplant seedlings, vegetables, etc... which are mainly grown in small truncated-pyramid, conical or cylindrical shaped sods of soil. The seedlings are supplied still rooted in the sods and must be transplanted one by one into the bare or, at times, mulched, i.e., covered by a thin plastic film, ground.

A transplanter machine, adapted to operate according to a direction of travel, in general terms, is equipped with:
- a supporting frame connectable to an agricultural machine;
- means for resting and advancing on the ground in said direction of travel;
- a ploughshare for the ground adapted to produce a furrow in which said seedlings are set down;
- means for closing said furrow;
- at least one transplanter unit.

Each transplanter unit comprises:
- feed means for a plurality of seedlings;
- means for distribution and setting down said seedlings in said furrow.

Conventional transplanter machines are known to have rotating feed means, each produced by means of a carousel rotatably supported by a vertical axis, and comprising a plurality of containers, each of which can contain a sod.

The carousel is operated by suitable transmission means, which cause it to rotate in steps or continuously when the machine advances in a straight line, and is provided with an opening that allows the synchronized fall of a single sod in the direction of the distribution and setting down means below.

Said distribution and setting down means comprise two parallel toothed discs, offset from each other, between which a plurality of cups is provided.

The cups are spaced from one another as a function of the desired transplant distance.

The movement of said distribution and setting down means describes a substantially circular trajectory for said cups, comprised between said feed means of the seedlings and the ground in which they are planted.

Each cup is composed, in substance, of an upper rim portion, for insertion of the seedlings, and of a lower portion formed by two oblique lateral walls pivoted to the upper portion of the cup, and mutually constrained by a spring and hinge system that allows their joint movement.

Close to the ground, a cam mechanism controls opening of the cup, so that the lateral walls spread the ground apart, creating a cavity or hole for housing the seedlings.

Said transplanter unit comprises transmission means that coordinate the stepped or continuous rotation of the rotating feeder with the continuous rotation of the toothed discs that support and move the cups and with the opening of the vertical walls of the cup plunged into the ground, through which the seedling to be set down passes.

Naturally, these operations for the passage and conveying of the seedlings from the feed means to the cups and to the ground must be carried out very quickly, but with a certain degree of precision and without damaging said seedlings; correct positioning of the seedling in the ground and in the furrow, in particular, is very important for its rooting and growth.

This type of transplanter machine has some limits and drawbacks.

Firstly, the number of said cups and their distribution along the circumference of said wheels is dictated as a function of the distance with which the seedlings are to be set down in the ground, also taking the speed of travel of the machine into account.

It is evident how the set-up of the machine changes each time, with each crop, based on the type of planting and the condition of the ground, and requires lengthy preparation times, deriving from the need to disassemble and reassemble the cups.

Slowdowns in productivity are evident and unavoidable.

Further drawbacks also concern the overall dimensions of the transplanter units and derive from the at times large diameters that the parallel wheels on which the cups are distributed require to have: often, to allow optimization of the planting operations there is a tendency to provide a larger number of cups, thus requiring the parallel wheels of the distribution means that support them to have large diameters. The increased overall dimensions cause a problem for the transplanter machine, both during its construction and its operation, with an increase in weight and a slowing of travel.

Moreover, often the cups are overlapped and positioned aligned along a vertical axis: in this case too, either the diameters of the wheels that support the cups are greatly increased or the size of said cups is decreased, however at the expense of receiving the sod to be transplanted.

Further drawbacks concern the contact time of the cup with the ground: the circular trajectory followed by the cups, often wide for the reasons cited above, causes prolonged contact of the cup on the ground, which leads to problems in the verticality with which the seedling is planted and consequently imprecise adhesion of the bottom of the sod with the bottom of the furrow, resulting in the possible presence of residual air under the roots, which makes rooting more difficult and, in the case of transplanting on mulched ground, causes undesirable lengthening of the cracks in the mulching film.

Further drawbacks of the mechanical movement system of the cups concern the problems of synchronism between the speed of travel of the machine and the rotation speed of the supporting wheels of the cups and consequently of the release speed of the seedlings in the ground. If coordination is not perfect, there is the risk of setting down the seedling in the ground not vertically, but with a certain inclination, with the same drawbacks mentioned above in relation to its rooting and growth.

From document JP 2009 284858 A is known of a transplanter machine of seedlings rooted in sods as described in the preamble of independent claim 1.

### Presentation of the invention

The object of the invention is to overcome these limits, allowing correct, quick and safe planting of the seedlings, and in particular:
- allowing quick set-up of the transplanter machine, which satisfies all the requirements of spacing between the seedlings;
- ensuring complete control between speed of travel of the transplanter machine and setting down cycle of the seedlings;
- producing a furrow of limited dimensions in the ground with a limited cracking of any mulching film;
- improving the precision with which the sods are positioned in the open furrow in the ground, avoiding any forward overturning of the seedlings;
- obtaining perfect verticality and adhesion to the ground;
- allowing faster planting increasing the hourly productivity of the transplanter machine.

These objects are achieved with a transplanter machine of seedlings rooted in sods with quick set-up, adapted to operate according to a direction of travel, comprising:
- a main supporting frame connectable to an agricultural machine;
- means for resting and advancing on the ground in said direction of travel;
- an electronic control unit,
- at least one transplanter unit, of the type comprising:
   - a secondary frame;
   - a feeder for a plurality of seedlings;
   - distribution means for said plurality of seedlings, comprising at least one cup, comprising two oblique lateral walls having a mutual opening movement, adapted to set down the individual seedlings in the ground, and a movement system for said at least one cup, adapted to move it cyclically from said feeder towards said ground and vice versa;
where said transplanter machine is characterized in that said movement system comprises:
- a drive shaft on which a driving gear wheel is fixed;
- drive means for said drive shaft;
- a first, a second and a third driven gear wheel, engaged by said driving gear wheel, identical to one another and to said driving gear wheel;
- a first, a second and a third crank rotatable respectively with said first, second and third driven gear wheel;
- a first and a second connecting rod operatively connected respectively between said first and second crank and said at least one cup;
- a third connecting rod operatively connected between said third crank and said second connecting rod,
where the linkage kinematics between said driving gear wheel, said driven gear wheels, said cranks, said connecting rods and said at least one cup allows said at least one cup to follow a elliptical trajectory with a vertical major axis, reducing the contact time with the ground to set down the single seedlings.

In a possible embodiment of the invention, said at least one cup comprises a funnel extension facing said feeder.

Moreover, said at least one transplanter unit comprises a header having tubular shape and having a first and a second end, provided with an inlet for said seedlings placed close to said feeder, and an outlet for said seedlings placed inside said funnel extension.

Advantageously, said first end of said header is rotatably associated by means of a pin to said feeder, while said second end of said header is constrained to slide inside said funnel extension.

In particular, the second end of said header comprises two protruding pins adapted to engage two corresponding slots produced on said funnel extension.

According to further aspects of the invention, said transplanter machine comprises:
- a first encoder, operatively connected to the means for resting and advancing the machine on the ground, adapted to supply said electronic control unit with a first signal that can be correlated to the distance travelled by said transplanter machine and to its speed;
- a second encoder operatively connected to said drive shaft, adapted to measure and to supply said electronic control unit with a second signal that can be correlated to the angle of rotation of said drive shaft on which said driving gear wheel is fixed.

Moreover, said electronic control unit comprises a decoding board capable of detecting the signals emitted by said first and second encoders and of defining the parameters to be used to control said drive means and govern the rotation of said drive shaft.

According to a possible variant of embodiment of the invention, said at least one transplanter unit comprises elastic means adapted to coact with said movement system to facilitate the upward movement of said at least one cup along its elliptical trajectory concordantly with the rotation of said drive shaft.

Preferably, said elastic means comprise a coil spring having a first and a second end, where said first end is fixed to said secondary frame of said transplanter unit and said second end is fixed to said second connecting rod.

The transplanter machine of seedlings rooted in sods with quick set-up according to the invention has numerous advantages.

The main advantage, deriving from the composition of the movement system of said at least one cup, consists in the tracing by the single cup of an elliptical trajectory with a vertical major axis, with the important decrease of the contact time thereof with the ground: reduced contact of the cup on the ground ensures that the seedling is set down with greater precision and verticality, and hence with a greater chance of good rooting of the seedling.

Mechanically, the contribution supplied by said third crank and by said third connecting rod is that of extending the trajectory of the cup, passing from a conventional circular trajectory to an elliptical trajectory, where the contact time with the ground is minimum.

The decrease in the contact of the cup with the ground in which the seedlings are planted is particularly advantageous in the case in which the ground is covered by a mulching film, which is lacerated to a lesser extent.

A decreased contact with the ground and the aid offered by the elastic means for the upward movement of the cup, speed up the entire movement of the distribution means and makes the force exerted for the upward movement uniform.

By providing each transplanter unit, and in particular the distribution means of the seedlings, with a single cup there are no problems of overall dimensions and interference with the other components of the machine. The machine is easier to produced and maintain, as well as lighter and therefore faster during movement on the field.

The funnel extension of the cup and the header hinged to the feeder accompany the fall of the seedling into the cup, still closed. Said funnel extension advantageously maintains said header aligned, accompanying the seedlings towards the ground with a certain degree of verticality and preventing them from impacting against the oblique walls of the cup leaving residues of compost which, over time, would cause the formation of thickening, of a sort of crust, compromising their release in the ground.

The transplanter machine further comprises at least two encoders, whose detected data are managed by said control unit, advantageously to ensure perfect coordination of the various linkage kinematics of each transplanter unit, also as a function of the travel of the machine and of the distance between seedlings set down in the ground.

In general, by providing the transplanter unit with a single cup and managing its movement electronically as a function of the various parameters constantly detected by the encoders and by the control unit, quick set-up of the entire transplanter machine is possible not only during each change of crop or ground, but also during the actual operation on the field.

### Brief description of the drawings

These and other features and advantages of the invention will be more evident from the more detailed description provided below, with the aid of the drawings that represent a preferred embodiment thereof, illustrated by way of non-limiting example, wherein:
Fig. 1 illustrates, in an axonometric view, a transplanter machine of seedlings rooted in sods with quick set-up according to the invention;
Figs. 2 and 3 illustrate, in an axonometric view partly without protective casing, a single transplanter unit of the machine according to the invention, in two extreme operating configurations, in the position for receiving the seedling and in the position for releasing it into the ground, respectively;
Fig. 4 illustrates, in a side view partially without protective casing, a single transplanter unit of the machine according to the invention, in an intermediate operating configuration;
Figs. 5, 6, 7 and 8 illustrate, in a side view partially without protective casing, a single transplanter unit of the machine according to the invention, during an operating cycle, with schematic indication of the elliptical trajectory followed by the cup.

### Detailed description of a preferred embodiment of the invention

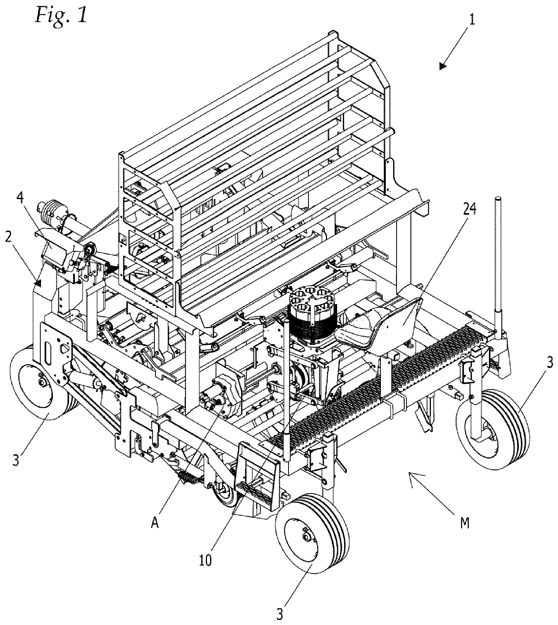

With reference to Fig. 1, there is illustrated a transplanter machine 1 of seedlings P rooted in sods, adapted to operate according to a direction of travel M, comprising substantially a supporting frame 2 provided with wheels 3, which act as means for resting and advancing on the ground in said direction of travel M, and at least one transplanter unit 10.

The transplanter machine 1 can be of self-propelled type, equipped with its own motor, or without a motor, to be used with an agricultural tractor or other towing vehicle, as in the variant illustrated.

In the variant illustrated the machine 1 is provided with a single transplanter unit 10, but in alternative variants more than one modular transplanting unit 10 can be provided on a single machine 1 to work on several parallel rows simultaneously.

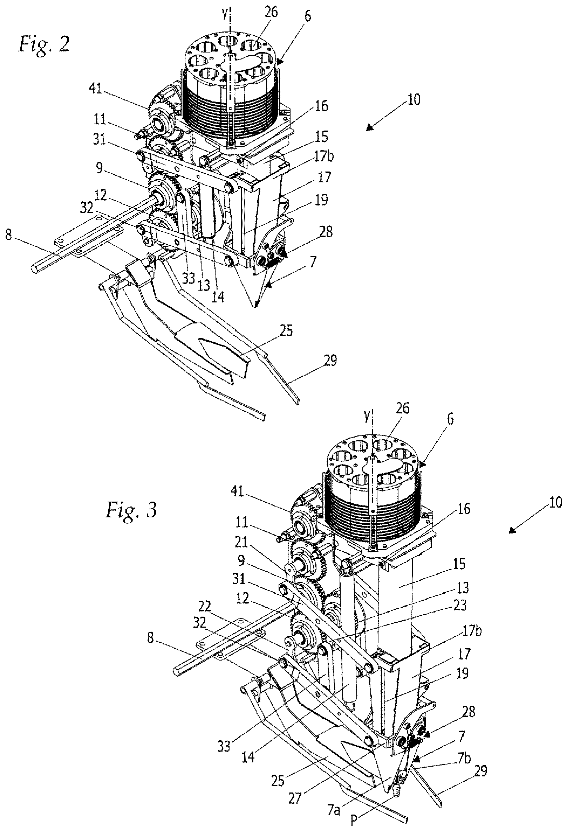

With reference now to Figs. 2-4, there is illustrate a single transplanter unit 10, produced to operate as modular unit of the transplanter machine 1 of Fig. 1.

Said transplanter unit 10 essentially comprises:
- a secondary frame 5;
- a feeder 6 for a plurality of seedlings P;
- distribution means for said plurality of seedlings P, adapted to receive said seedlings P from said feeder 6 and to set them down in the ground T.

In greater detail, said feeder 6 for a plurality of seedlings P is a feeder of rotating type, known as carousel feeder, rotatably supported by a substantially vertical axis y.

Said rotating feeder 6 comprises a plurality of containers 26 with an open base to contain said seedlings P previously loaded inside them.

Said feeder 6 rotates above a fixed disc acting as base for said containers 26.

Said disc comprises a single hole with a vertical axis, so as to allow delivery of the individual seedlings P in sequence.

Said feeder 6 is in fact connected to transmission means, which cause it to rotate in steps or continuously when the machine 1 advances in a straight line in the direction of travel M.

At each step of the feeder 6 a container 26 is arranged aligned with the hole of said fixed disc, allowing ejection of the seedling P contained therein.

An operator, seated on the seat 24 in front of the feeder, refills the empty containers 26, as the seedlings P fall.

Said transplanter unit 10 further comprises means for distribution and setting down said plurality of seedlings P in the ground T.

Said distribution means comprise a cup 7 with controlled opening and a movement system for said cup 7, in particular adapted to move said cup 7 cyclically from said feeder 6 towards said ground T and vice versa.

Said cup 7 is composed, in substance, of an upper rim portion 27 and of a lower portion comprising two oblique lateral walls 7a, 7b pivoted to the upper portion of the cup 7, and mutually constrained by a spring and hinge system 28 that allows their joint movement.

Close to the ground T, a lever mechanism (not shown) controls opening of the cup 7, so that the lateral walls 7a, 7b spread the ground T apart, creating a cavity or hole to house the seedlings P.

Said cup 7 comprises a funnel extension 17 facing said feeder 6. Said funnel extension 17 is truncated cone shaped, with a minor base 17a permanently associated with the rim 27 of the cup 7 and a major base 17b open and facing said feeder 6.

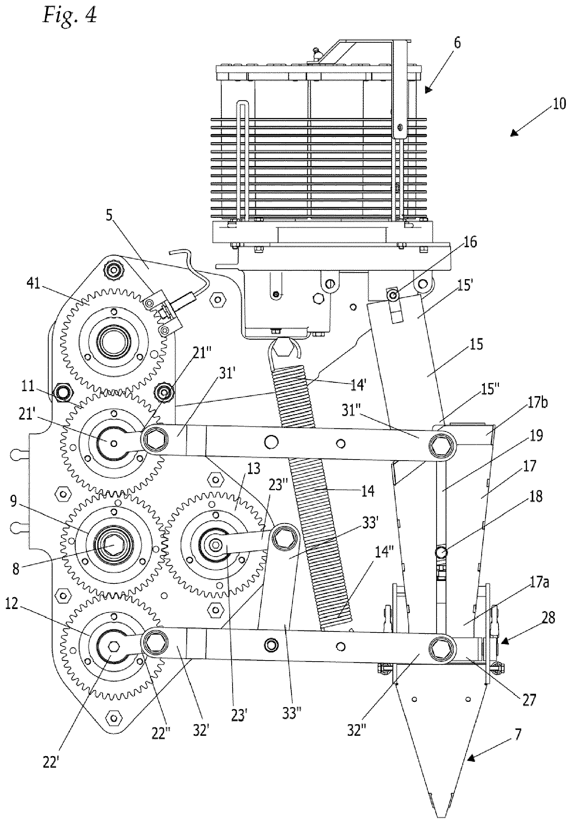

With particular reference to the side view without casing of Fig. 4, said movement system of said cup 7 comprises:
- a drive shaft 8 on which a driving gear wheel 9 is fixed;
- drive means A for said drive shaft 8;
- a first 11, a second 12 and a third 13 driven gear wheel, identical to one another and all engaged by said driving gear wheel 9;
- a first 21, a second 22 and a third 23 crank rotating respectively with said first 11, second 12 and third 13 driven gear wheel;
- a first 31 and a second 32 connecting rod operatively connected respectively between said first 21 and second 22 crank and said cup 7;
- a third connecting rod 33 operatively connected between said third crank 23 and said second connecting rod 32.

Preferably, said drive shaft 8 is a hexagonal shaft, and said drive means A comprise an oleopneumatic motor.

Said first 21, second 22 and third 23 crank each comprise a first 21', 22', 23' and a second 21", 22", 23" end; the first ends 21', 22', 23' of said first 21, second 22 and third 23 crank are fixed respectively to said first 11, second 12 and third 13 driven gear wheel and rotate with them.

Said first 31 and second 32 connecting rod each comprise a first 31', 32' and a second 31", 32" end; the first ends 31', 32' of said connecting rods 31, 32 are hinged to the second ends 21", 22" of said first 21 and second 22 crank, respectively; the second ends 31", 32" of said connecting rods 31, 32 are hinged to said cup 7, at the major 17b and minor 17a bases of said truncated cone shaped funnel extension 17.

Said third connecting rod 33 also comprises a first 33' and a second 33" end: said first end 33' is hinged to the second end 23" of said third crank 23, while said second end 33" is hinged to said second connecting rod 32 at a median portion thereof.

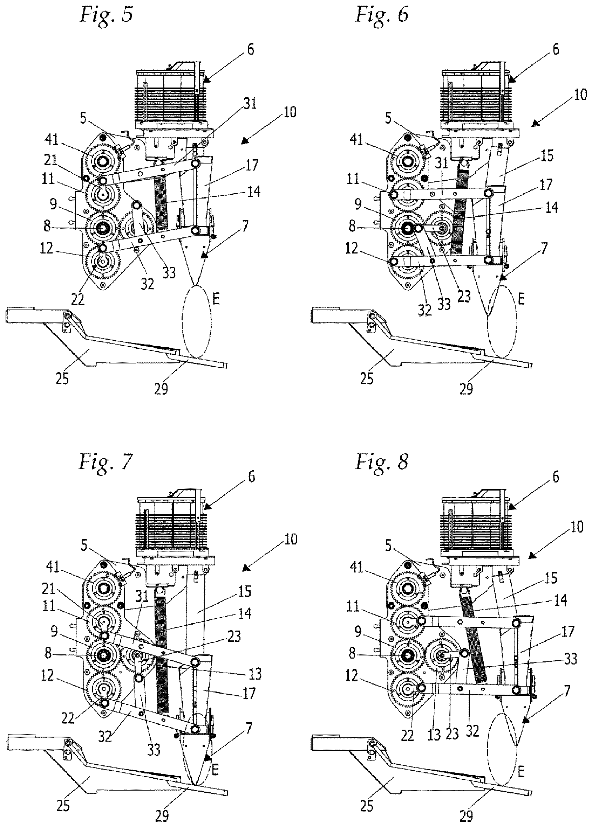

The kinematic chain that connects said driving gear wheel 9, said driven gear wheels 11, 12, 13, said cranks 21, 22, 23, said connecting rods 31, 32, 33 and said cup 7, determines the fact that said cup 7 follows an elliptical trajectory E with vertical major axis (Figs. 5-8) in a plane π parallel to the direction of travel M of the machine 1, reducing the contact time with the ground T to set down the single seedlings P.

Said transplanter unit 10 comprises elastic means adapted to coact with said movement system to facilitate the upward movement of said cup 7 along its elliptical trajectory E coordinating the drive means A of the drive shaft 8.

In particular, said elastic means comprise a coil spring 14.

Said coil spring 14 comprises a first 14' and a second 14" end: said first end 14' is fixed to said secondary frame 5 of said transplanter unit 10; said second end 14" is fixed to said second connecting rod 32, in an intermediate position between its second end 32" hinged to the cup 7 and the point in which the second end 33" of said third connecting rod 33 is hinged.

The downward movement of the cup 7 along the elliptical trajectory E is aided by the force of gravity which, without adding stresses to the drive means A, automatically loads said coil spring 14; during the upward movement of the cup 7, the return force of the pre-loaded coil spring 14 contributes to return the cup 7 from the height of the ground T to close to the feeder 6.

Said transplanter unit 10 comprises a header 15 having a direction of longitudinal extension, placed between said rotating feeder 6, to which it is rotatably fixed, and said cup 7; said header 15 is adapted to accompany the seedling P during its descent into the cup 7, which during the elliptical movement deviates from the vertical position placed under the hole of the feeder 6 from which the seedling P falls.

Said header 15 has a tubular shape and comprises a first end 15' provided with an inlet for said seedlings P, and a second end 15" provided with an outlet for said seedlings.

Said first end 15' of said header 15 is rotatably associated by means of a pin 16 with said feeder 6, so that the hole of the fixed disc of the feeder 6 from which the seedlings P are ejected is always placed over the inlet of the header 15, but at the same time said header 15 is free to oscillate in a vertical plane substantially coincident with the plane π that contains the elliptical trajectory E followed by the cup 7.

Said second end 15" of said header 15 is instead placed inside said funnel extension 17.

In particular, said second end 15" of said header 15 is constrained to slide inside said funnel extension 17 to maintain a certain degree of continuity between the oscillating header 15 and the funnel extension 17 of the cup 7 in elliptical movement.

The second end 15" of said header 15 comprises two protruding pins 18 adapted to slidingly engage two corresponding slots 19 produced on said funnel extension 17, so as to create a telescoping between header 15 and funnel extension 17, to adapt to the position of the cup 7 along its elliptical trajectory E.

In the variant illustrated, said transplanter unit 10 comprises a ploughshare 25 and earthing up blades 29 for opening and subsequently closing a furrow, which act as the machine 1 advances in the direction of travel M. Said ploughshare 25 forms a substantially flat bottomed furrow in the ground T, inside which the seedlings P are set down.

In the variant illustrated, said transplanter unit 10 comprises a fourth driven gear wheel 41, advantageously identical to the others, engaged by said second driven gear wheel 12 (in turn engaged by said driving gear wheel 9), to which further linkage kinematics of the transplanter unit 10, such as the carousel feeder 6, are connected.

Said transplanter machine 1 comprises an electronic control unit 4, in which an electronic program resides, which manages each single transplanter unit 10, and the correct timing of the operation of all the transplanter units that may be present on the machine.

Said machine 1 comprises a first encoder (not illustrated), operatively connected to the means 3 for resting and advancing the machine on the ground, adapted to supply a signal that can be correlated to the distance travelled by said transplanter machine 1 and to its speed.

Said machine 1 further comprises a second encoder (not illustrated) operatively connected to said drive shaft 8, adapted to measure the angle of rotation of said drive shaft 8 on which said driving gear wheel 9 is fixed. Said second encoder is particularly advantageous in use with an oleopneumatic drive motor of said drive shaft 8, as parameters such as the fluidity of the oil, easily influenced by external conditions, can be checked at any time.

Said electronic control unit 4 comprises a decoding board capable of detecting the signals emitted by said first and second encoders and of defining the parameters to be used to control said drive means and govern the rotation of said drive shaft 8.

In the case in which the transplanter machine 1 is equipped with several transplanter units 10, a same drive shaft 8 can synchronously control all the driving gear wheels 9.

Operation of the transplanter machine 1 of seedlings P rooted in sods with quick set-up is as follows, with particular reference to Figs. 5-8 in which the elliptical trajectory E followed by the cup 7 is represented schematically.

The rotating feeder 6 moves in steps coordinating with the position taken by the cup 7, so that a seedling P passes through the hole and descends along the header 15 and the funnel extension 17 to directly reach the closed cup 7 when the fall height is minimum and hence the cup 7 is in the position shown in Fig. 5 (also Fig. 2) at the upper end of the vertical major axis of its elliptical trajectory E.

Fig. 7 (also Fig. 3) shows the transplanter unit 10 in the position for releasing the seedling P in the ground T, with the cup 7 in contact with the ground T, at the lower end of the vertical major axis of its elliptical trajectory E, and its walls 7a, 7b spread apart to allow delivery of the seedling P.

Figs. 6 and 8 illustrate the steps of intermediate movement of the cup 7, downward and upward respectively, required to perform a complete cycle and return the cup 7 close to the feeder 6.

The speed of travel of the machine 1, the rotation speed of the rotating feeder 6 and the rotation speed of the drive shaft 8 of the transplanter unit 10 are controlled as a function of the various pulses generated by the first encoder connected to the travel of the transplanter machine 1, by the second encoder connected to the drive shaft 8 on which the driving gear wheel 9 is fitted, of the pulse generated by the proximity sensors that signal opening of the cup 7.

## Claims

1. A transplanter machine (1) of seedlings (P) rooted in sods with quick set-up, adapted to operate according to a direction of travel (M), comprising:
- a main supporting frame (2) connectable to an agricultural machine;
- means for resting and advancing (3) on the ground in said direction of travel (M);
- an electronic control unit (4),
- at least one transplanter unit (10), of the type comprising:
- a secondary frame (5);
- a feeder (6) for a plurality of seedlings (P);
- distribution means for said plurality of seedlings (P), comprising at least one cup (7), comprising two oblique lateral walls (7a, 7b) having a mutual opening movement, and adapted to set down the individual seedlings (P) in the ground (T), and a movement system for said at least one cup (7) adapted to move it cyclically from said feeder (6) towards said ground (T) and vice versa;
where said transplanter machine (1) is **characterized in that** said movement system comprises:
- a drive shaft (8) on which a driving gear wheel (9) is fixed;
- drive means for said drive shaft (8);
- a first (11), a second (12) and a third (13) driven gear wheel engaged by said driving gear wheel (9), identical to one another and to said driving gear wheel (9);
- a first (21), a second (22) and a third (23) crank rotating respectively with said first (11), second (12) and third (13) driven gear wheel;
- a first (31) and a second (32) connecting rod operatively connected respectively between said first (21) and second (22) crank and said at least one cup (7);
- a third connecting rod (33) operatively connected between said third crank (23) and said second connecting rod (32),
where the linkage kinematics between said driving gear wheel (9), said driven gear wheels (11, 12, 13), said cranks (21, 22, 23), said connecting rods (31, 32, 33) and said at least one cup (7), allow said at least one cup (7) to follow an elliptical trajectory (e) with vertical major axis, reducing the contact time with the ground (T) to set down the individual seedlings (P).

2. The transplanter machine (1) according to claim 1, **characterized in that** said at least one cup (7) comprises a funnel extension (17) facing said feeder (6).

3. The transplanter machine (1) according to claim 2, **characterized in that** said at least one transplanter unit (10) comprises a header (15) having tubular shape and having a first (15') and a second (15") end, provided with an inlet for said seedlings (P) placed close to said feeder (6), and an outlet for said seedlings placed inside said funnel extension (17).

4. The transplanter machine (1) according to claim 3, **characterized in that** said first end (15') of said header (15) is rotatably associated by means of a pin (16) with said feeder (6), while said second end (15") of said header (15) is constrained to slide inside said funnel extension (17).

5. The transplanter machine according to claim 4, **characterized in that** said second end (15") of said header (15) comprises two protruding pins (18) adapted to engage two corresponding slots (19) produced on said funnel extension (17).

6. The transplanter machine (1) according to claim 1, **characterized in that** it comprises a first encoder, operatively connected to the means for resting and advancing (3) the transplanter machine (1) on the ground, adapted to supply said electronic control unit (4) with a first signal that can be correlated to the distance travelled by said transplanter machine (1) and to its speed.

7. The transplanter machine (1) according to claim 1, **characterized in that** it comprises a second encoder operatively connected to said drive shaft (8), adapted to measure and supply said electronic control unit (4) with a second signal that can be correlated to the angle of rotation of said drive shaft (8) on which said driving gear wheel (9) is fixed.

8. The transplanter machine (1) according to claims 6 and 7, **characterized in that** said electronic control unit (4) comprises a decoding board capable of detecting the signals emitted by said first and second encoders and of defining the parameters to use to control said drive means and govern the rotation of said drive shaft (8).

9. The transplanter machine (1) according to claim 1, **characterized in that** said at least one transplanter unit (10) comprises elastic means adapted to coact with said movement system to facilitate the upward movement of said at least one cup (7) along its elliptical trajectory (e) concordantly with the rotation of said drive shaft (8).

10. The transplanter machine (1) according to claim 9, **characterized in that** said elastic means comprise a coil spring (14) having a first (14') and a second (14") end, where said first end (14') is fixed to said secondary frame (5) of said transplanter unit (10) and said second end (14") is fixed to said second connecting rod (32).

## Patentansprüche

1. Verpflanzmaschine (1) für Sämlinge (P), die in Soden verwurzelt sind, mit schnellem Aufbau, geeignet, um in einer Fahrtrichtung (M) zu arbeiten, umfassend:
- einen Hauptstützrahmen (2), der mit einer Landwirtschaftsmaschine verbunden werden kann;
- Mittel zum Aufstützen und Fortbewegen (3) auf dem Boden in der besagten Fahrtrichtung (M);
- eine elektronische Steuereinheit (4),
- mindestens eine Verpflanzeinheit (10), des Typs umfassend:
- einen Sekundärrahmen (5);
- eine Zuführvorrichtung (6) für eine Vielzahl von Sämlingen (P);
- Verteilungsmittel für die besagte Vielzahl von Sämlingen (P), umfassend mindestens einen Kelch (7), umfassend zwei schräge Seitenwände (7a, 7b), die eine gegenseitige Öffnungsbewegung aufweisen, und geeignet sind, um die einzelnen Sämlinge (P) im Boden (T) abzulegen, und ein Bewegungssystem für den besagten mindestens einen Kelch (7), geeignet, um diese zyklisch von der besagten Zuführvorrichtung (6) zu dem besagten Boden (T) hin und umgekehrt zu bewegen;
wobei die besagte Verpflanzmaschine (1) **dadurch gekennzeichnet ist, dass** das besagte Bewegungssystem Folgendes umfasst:
- eine Antriebswelle (8), auf der ein Antriebszahnrad (9) befestigt ist;
- Antriebsmittel für die besagte Antriebswelle;
- ein erstes (11), ein zweites (12) und ein drittes (13) angetriebenes Zahnrad, das von dem besagten Antriebszahnrad (9) in Anspruch genommen wird, die untereinander und mit dem besagten Antriebszahnrad (9) identisch sind;
- eine erste (21), eine zweite (22) und eine dritte (23) Kurbelwelle, die sich jeweils mit dem besagten ersten (11), zweiten (12) und dritten (13) angetriebenen Zahnrad drehen;
- eine erste (31) und eine zweite (32) Verbindungsstange, die jeweils zwischen der besagten ersten (21) und der zweiten (22) Kurbelwelle und dem besagten mindestens einen Kelch (7) funktionell verbunden sind;
- eine dritte Verbindungsstange (33), die funktionell zwischen der besagten dritten Kurbel (23) und der besagten zweiten Verbindungsstange (32) verbunden ist, wobei die Verbindungskinematik zwischen dem besagten Antriebszahnrad (9), den besagten angetriebenen Zahnrädern (11, 12, 13), den besagten Kurbeln (21, 22, 23), den besagten Verbindungsstangen (31, 32, 33) und dem besagten mindestens einen Kelch (7) es dem besagten mindestens einen Kelch (7) ermöglicht, einer elliptischen Bahn (e) mit vertikaler Hauptachse zu folgen, wodurch die Kontaktzeit mit dem Boden (T) zum Absetzen der einzelnen Sämlinge (P) reduziert wird.

2. Die Verpflanzmaschine (1) gemäß Anspruch 1, **dadurch gekennzeichnet, dass** der besagte mindestens eine Kelch (7) eine Trichterverlängerung (17) umfasst, die der besagten Zuführvorrichtung (6) zugewandt ist.

3. Die Verpflanzmaschine (1) gemäß Anspruch 2, **dadurch gekennzeichnet, dass** die besagte mindestens eine Verpflanzeinheit (10) einen Kopf (15) mit rohrförmiger Form und einem ersten (15') und einem zweiten (15") Ende umfasst, versehen mit einem Einlass für die besagten Sämlinge (P), die in der Nähe der besagten Zuführvorrichtung (6) angeordnet sind, und einem Auslass für die besagten Sämlinge, die in der besagten Trichterverlängerung (17) angeordnet sind.

4. Die Verpflanzmaschine (1) gemäß Anspruch 3, **dadurch gekennzeichnet, dass** das besagte erste Ende (15') des besagten Kopfes (15) mittels eines Stifts (16) drehbar mit der besagten Zuführvorrichtung (6) verbunden ist, während das besagte zweite Ende (15") des besagten Kopfes (15) gezwungen ist, in der besagten Trichterverlängerung (17) zu gleiten.

5. Die Verpflanzmaschine (1) gemäß Anspruch 4, **dadurch gekennzeichnet, dass** das besagte zweite Ende (15") des besagten Kopfes (15) zwei vorstehende Stifte (18) umfasst, geeignet, um zwei entsprechende Schlitze (19) in Anspruch zu nehmen, die an der besagten Trichterverlängerung (17) ausgebildet sind.

6. Die Verpflanzmaschine (1) gemäß Anspruch 1, **dadurch gekennzeichnet, dass** sie einen ersten Kodierer umfasst, der funktionell mit den Mitteln zum Aufstützen und Fortbewegen (3) der Verpflanzmaschine (1) auf dem Boden verbunden ist, geeignet, um die besagte elektronische Steuereinheit (4) mit einem ersten Signal zu versorgen, das mit der Strecke, die von der besagten Verpflanzmaschine (1) zurückgelegt wurde, und mit ihrer Geschwindigkeit in Beziehung gesetzt werden kann.

7. Die Verpflanzmaschine (1) gemäß Anspruch 1, **dadurch gekennzeichnet, dass** sie einen zweiten Kodierer umfasst, der funktionell mit der besagten Antriebswelle (8) verbunden ist, geeignet, um die besagte elektronische Steuereinheit (4) mit einem zweiten Signal zu messen und zu versorgen, das mit dem Drehwinkel der besagten Antriebswelle (8) in Beziehung gesetzt werden kann, auf der das besagte Antriebszahnrad (9) befestigt ist.

8. Die Verpflanzmaschine (1) gemäß Anspruch 6 und 7, **dadurch gekennzeichnet, dass** die besagte elektronische Steuereinheit (4) eine Dekodiertafel umfasst, die in der Lage ist, die von dem besagten ersten und dem zweiten Kodierer ausgegebenen Signale zu erfassen und die Parameter zu definieren, die zur Steuerung der besagten Antriebsmittel und zur Steuerung der Drehung der besagten Antriebswelle (8) verwendet werden sollen.

9. Die Verpflanzmaschine (1) gemäß Anspruch 1, **dadurch gekennzeichnet, dass** die besagte mindestens eine Verpflanzeinheit (10) elastische Mittel umfasst, geeignet, mit dem besagten Bewegungssystem zusammenzuwirken, um die Aufwärtsbewegung des besagten mindestens einen Kelchs (7) entlang seiner elliptischen Bahn (e) in Übereinstimmung mit der Drehung der besagten Antriebswelle (8) zu erleichtern.

10. Die Verpflanzmaschine (1) gemäß Anspruch 9, **dadurch gekennzeichnet, dass** die besagten elastischen Mittel eine Schraubenfeder (14) mit einem ersten (14') und einem zweiten (14") Ende umfassen, wobei das besagte erste Ende (14') an dem besagten Sekundärrahmen (5) der besagten Verpflanzeinheit (10) und das besagte zweite Ende (14") an der besagten zweiten Verbindungsstange (32) befestigt ist.

## Revendications

1. Machine de transplantation (1) de plants (P) de racines en boule, à réglage rapide, adaptée pour fonctionner selon un sens de marche (M), comprenant :
- un châssis principal (2) pouvant être relié à une machine agricole ;
- des moyens d'appui et d'avancement (3) sur le sol dans ledit sens de marche (M) ;
- une unité de commande électronique (4),
- au moins une unité de transplantation (10), du type comprenant :
- un châssis secondaire (5) ;
- un dispositif d'alimentation (6) pour une multitude de plants (P) ;
- des moyens de distribution pour ladite multitude de plants (P), comprenant au moins une coupelle (7), comprenant deux parois latérales obliques (7a, 7b) ayant un mouvement d'ouverture mutuelle, et adaptées pour déposer les plants individuels (P) dans le sol (T), et un système de mouvement pour ladite au moins une coupelle (7) adapté pour la déplacer cycliquement depuis ledit dispositif d'alimentation (6) vers ledit sol (T) et vice-versa ;
où ladite machine de transplantation (1) est **caractérisée par le fait que** ledit système de mouvement comprend :
- un arbre d'entraînement (8) sur lequel est fixée une roue dentée menante (9) ;
- des moyens d'entraînement pour ledit arbre d'entraînement (8) ;
- une première (11), une deuxième (12) et une troisième (13) roues dentées menées engagées par ladite roue dentée menante (9), identiques entre elles et à ladite roue dentée menante (9) ;
- une première (21), une deuxième (22) et une troisième (23) manivelle tournant respectivement avec ladite première (11), deuxième (12) et troisième (13) roue dentée menée ;
- une première (31) et une deuxième (32) bielle reliées de manière opérationnelle respectivement entre lesdites première (21) et deuxième (22) manivelles et ladite au moins une coupelle (7) ;
- une troisième bielle (33) reliée fonctionnellement entre ladite troisième manivelle (23) et ladite deuxième bielle (32),
où la cinématique de liaison entre ladite roue dentée menante (9), lesdites roues dentées menées (11, 12, 13), lesdites manivelles (21, 22, 23), lesdites bielles (31, 32, 33) et ladite au moins une coupelle (7), permet à ladite au moins une coupelle (7) de suivre une trajectoire elliptique (e) à grand axe vertical, réduisant le temps de contact avec le sol (T) pour déposer les plants individuels (P).

2. Machine de transplantation (1) selon la revendication 1, **caractérisée par le fait que** ladite au moins une coupelle (7) comprend une extension en entonnoir (17) orientée vers ledit dispositif d'alimentation (6).

3. Machine de transplantation (1) selon la revendication 2, **caractérisée par le fait que** ladite au moins une unité de transplantation (10) comprend un collecteur (15) de forme tubulaire et ayant une première (15') et une seconde (15") extrémité, pourvu d'une entrée pour lesdits plants (P) placés à proximité dudit dispositif d'alimentation (6), et d'une sortie pour lesdits plants placés à l'intérieur de ladite extension en entonnoir (17).

4. Machine de transplantation (1) selon la revendication 3, **caractérisée par le fait que** ladite première extrémité (15') dudit collecteur (15) est associée en rotation au moyen d'un axe (16) audit dispositif d'alimentation (6), tandis que ladite deuxième extrémité (15") dudit collecteur (15) est contrainte à coulisser à l'intérieur de ladite extension en entonnoir (17).

5. Machine de transplantation selon la revendication 4, **caractérisée par le fait que** ladite deuxième extrémité (15") dudit collecteur (15) comprend deux goupilles saillantes (18) adaptées pour s'engager dans deux fentes correspondantes (19) produites sur ladite extension en entonnoir (17).

6. Machine de transplantation (1) selon la revendication 1, **caractérisée par le fait qu'**elle comprend un premier encodeur, relié fonctionnellement aux moyens d'appui et d'avancement (3) de la machine de transplantation (1) sur le sol, adapté pour fournir à ladite unité de commande électronique (4) un premier signal pouvant être corrélé à la distance parcourue par ladite machine de transplantation (1) ainsi qu'à sa vitesse.

7. Machine de transplantation (1) selon la revendication 1, **caractérisée par le fait qu'**elle comprend un second encodeur relié fonctionnellement audit arbre d'entraînement (8), apte à mesurer et à fournir à ladite unité de commande électronique (4) un second signal pouvant être corrélé à l'angle de rotation dudit arbre d'entraînement (8) sur lequel est fixée ladite roue dentée menante (9).

8. Machine de transplantation (1) selon les revendications 6 et 7, **caractérisée par le fait que** ladite unité de commande électronique (4) comprend une carte de décodage capable de détecter les signaux émis par lesdits premier et deuxième encodeurs et de définir les paramètres à utiliser pour commander lesdits moyens d'entraînement et régir la rotation dudit arbre d'entraînement (8).

9. Machine de transplantation (1) selon la revendication 1, **caractérisée par le fait que** ladite au moins une unité de transplantation (10) comprend des moyens élastiques adaptés pour coagir avec ledit système de mouvement afin de faciliter le mouvement vers le haut de ladite au moins une coupelle (7) le long de sa trajectoire elliptique (e) concordant avec la rotation dudit arbre d'entraînement (8).

10. Machine de transplantation (1) selon la revendication 9, **caractérisée par le fait que** lesdits moyens élastiques comprennent un ressort hélicoïdal (14) ayant une première (14') et une seconde (14") extrémité, où ladite première extrémité (14') est fixée audit châssis secondaire (5) de ladite unité de transplantation (10) et ladite seconde extrémité (14") est fixée à ladite seconde bielle (32).
